# EUROPEAN PATENT SPECIFICATION

(11) **EP 2 569 502 B1**
(45) Date of publication and mention of the grant of the patent: **25.06.2014**
(21) Application number: 11715874.1
(22) Date of filing: 28.03.2011
(51) Int. Cl.: E06C 7/46, F16M 7/00, F16M 11/14

(54) **Device to be mounted at the lower end of one or more uprights of a portable ladder and ladder comprising said device**
Element zur Befestigung am unteren Ende eines oder mehrerer Holme einer tragbaren Leiter und Leiter mit einem solchen Element
Dispositif à être monté à l'extrémité inférieure d'un ou plusieurs montants d'une échelle portable et une échelle comprenant ledit dispositif

(30) Priority: 10.05.2010 IT VI20100023 U
(43) Date of publication of application: 20.03.2013
(73) Proprietor: Siviero, Monica, 36028 Rossano - Veneto (VI) (IT); Ferremi, Luca, 25087 Salò (BS) (IT); Sordo, Pietro, 36027 - Rosà (Vicenza) (IT)
(72) Inventor: SORDO, Pietro, 36027 - Rosà (Vicenza) (IT)
(74) Representative: Bettello, Pietro
(86) International application number: PCT/EP2011/001540
(87) International publication number: WO 2011/141092

(56) References cited:
- GB-A- 144 042
- GB-A- 876 471
- US-A- 1 455 002

## Description

The present invention regards a device to be mounted at the lower end of one or more uprights of a portable ladder, according to the preamble of claim 1. The invention also concerns a ladder comprising said device at least in one of its uprights.

It is known that the portable ladders, used both at household and professional level, for example by electricians, plumbers and artisans in general, are often of the type having a single pair of parallel uprights, connected by a series of equally spaced transverse bars, on which the foot of the ascending person steps.

Also known are ladders of the portable type defined "foldable", constituted by a simple ladder, hinged at the upper end thereof, with a frame substantially of the same length thereof; by opening, such ladder is capable of supporting itself on any floor or surface in general, without requiring further supports. Foldable ladders are always provided with means that prevent an excessive spreading apart between the actual ladder and the framework mentioned above; furthermore, such ladders are almost always such to have a shelf, which is arranged horizontally when the ladder is open, such shelf resting on the last bar of the ladder itself.

In order to prevent dangerous accidents for the user, it is generally provided for that at the lower ends of the uprights of the portable ladders there be provided rubber elements or however elements that increase the friction present between said ends and the surfaces that support the ladder, with the evident object of guaranteeing the stability of the ladder.

Unfortunately, sometimes these solutions are not sufficient and, in particular situations, the ladder slides, with the consequences that sometimes expose the user to danger.

The following documents can be mentioned as examples of the state of the art: GB 144 042 A; US 1 455 022 A; GB 876 471 A, which discloses a device according to the preamble of claim 1.

These documents describe a portable ladder whose uprights, at their lower end, present a structure which comprising a cap, at whose concave surface, facing towards the surface on which the ladder rests, one or more sucker elements is fixed.

Said previously mentioned documents are actually outdated, two of them being dated back to the early '900, and they actually did not have a great commercial development, apparently due to their poor practicality and/or their high cost thereof. With the aim of overcoming such drawbacks, one of the applicants of this invention described a foldable ladder in the Italian patent n° 1307071.

The primary object of the present invention is to provide a device, to be mounted at the lower end of one or more uprights of a portable ladder, which results more practical, effective and useful on respect of the devices of the state of the art. Another object of this invention is to provide a portable ladder comprising said device at a base of at least one of their uprights.

This is obtained by means of a device according to the characterising portion of claim 1.

These and other characteristics of the invention shall now be described hereinafter in detail, with reference to a particular embodiment, provided by way of non-limiting example, with the help of the attached drawings, where:
- figure 1 illustrates an overall view of a ladder according to the invention;
- figures 2 and 3 illustrate a lateral view of the ladder according to the invention, respectively in operating position and inoperative condition, once folded;
- figure 4 illustrates the structure present at the base of the uprights of the ladder according to the invention;
- figures 5 and 6 respectively represent a lateral and elevational view of the lower part of one of the uprights of the ladder according to the invention;
- figure 7 represents a top view of the structure present at the lower part of the uprights of the ladder according to the invention;

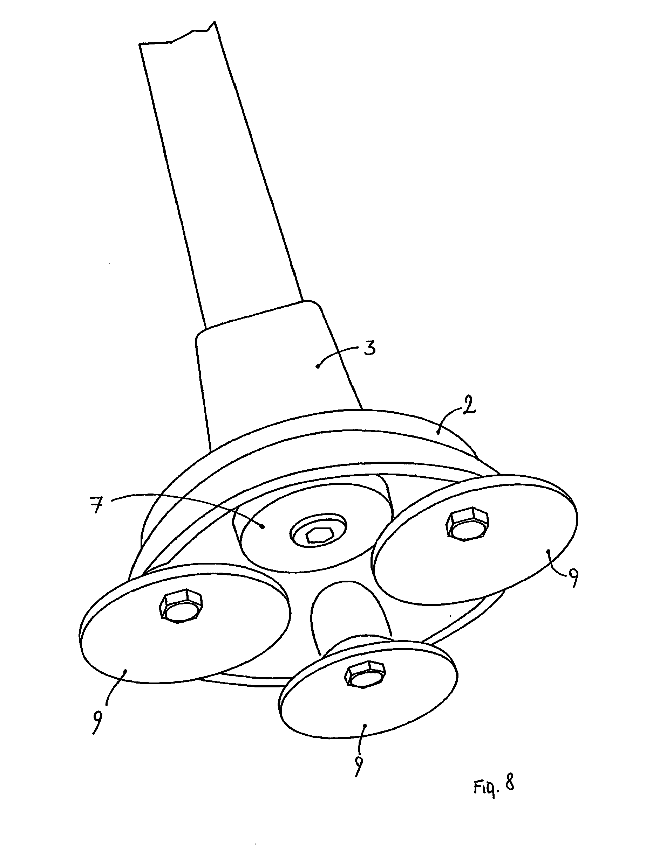

- figure 8 represents a bottom view of the lower part of said structure;

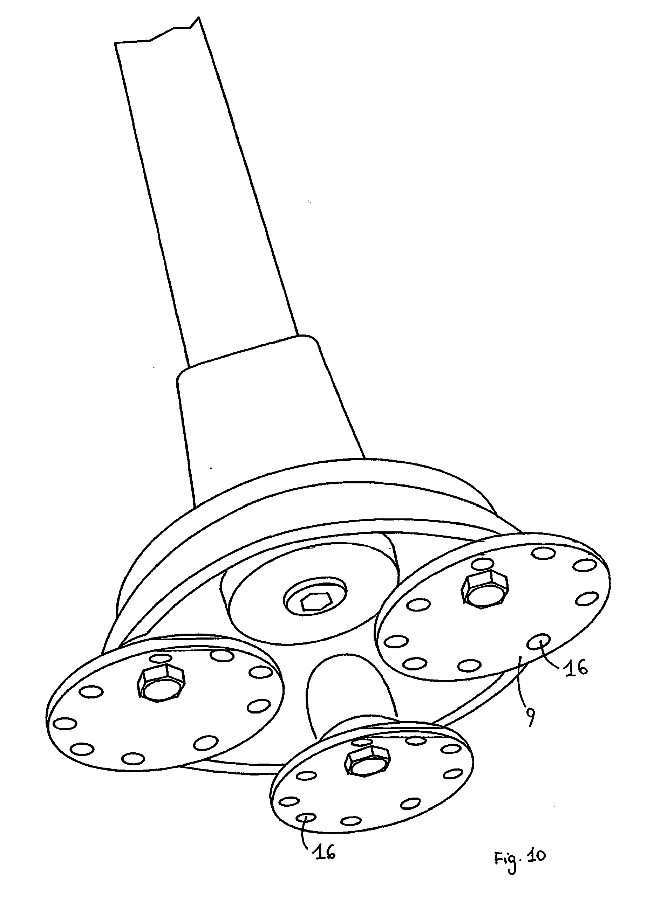

- figures 9 and 10 represent two possible construction variants of the elements present in the previously mentioned structure.

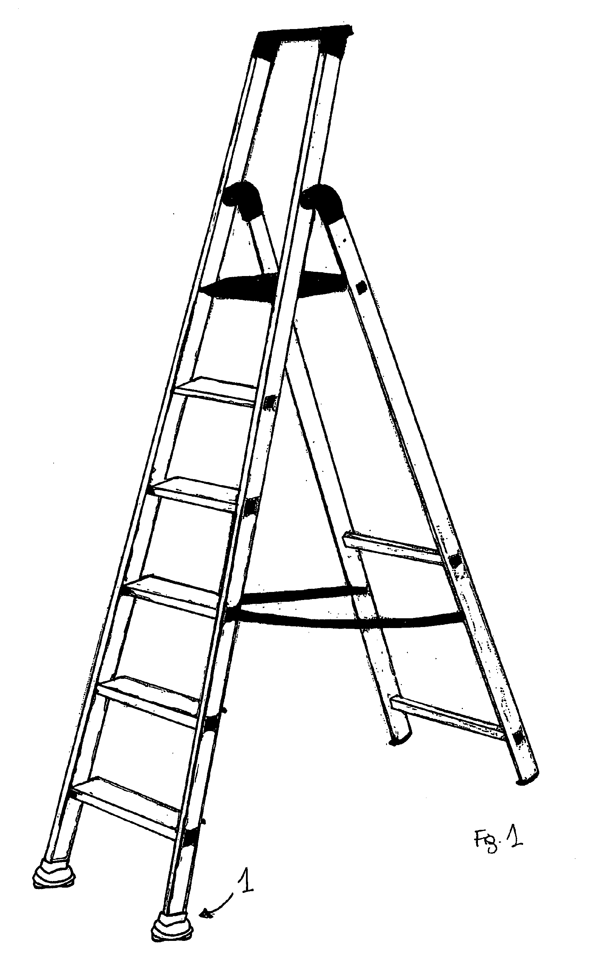

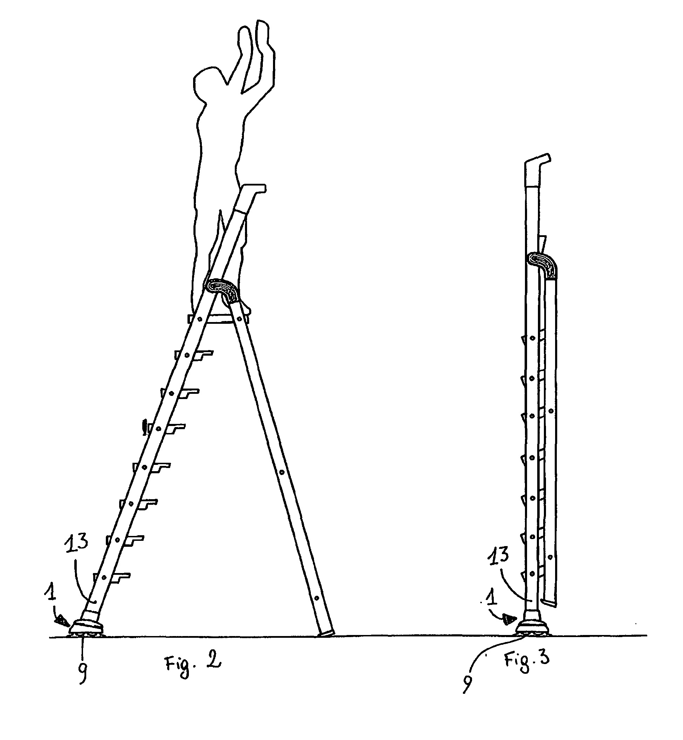

As observable in figures 1 to 3 the ladder according to the invention can be of the so-called foldable type, as illustrated in the figures, or it can be of the simple type with two uprights mutually coupled by transverse bars.

According to the invention, it is provided for that at the ends 13 of two uprights thereof (in this case being a foldable ladder, uprights to which bars are fixed) there be present a structure 1 at whose lower surface, positioned at the floor supporting the ladder, a plurality of sucker elements 9 is provided, which are susceptible to strongly adhere to the ground following the formation of vacuum beneath said elements, all being provided according to per se known means.

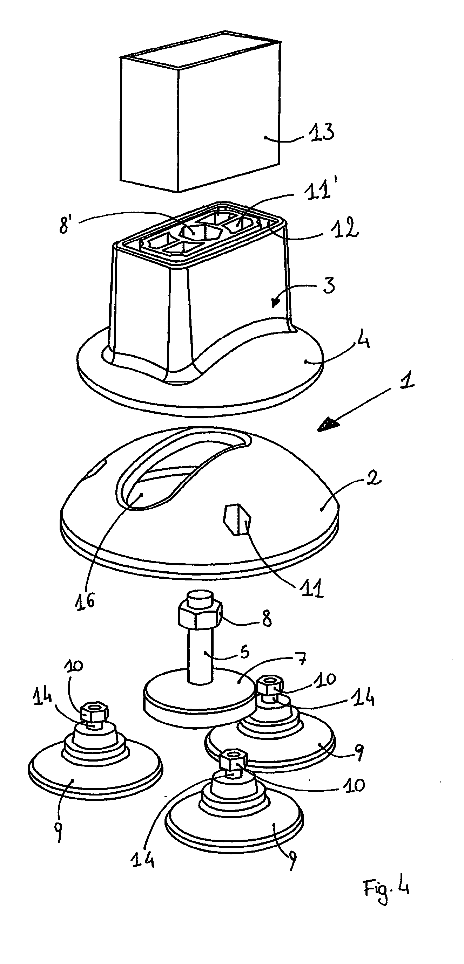

Such a structure 1 which, as observable particularly in figure 4, comprises a cap 2, at whose concave surface, facing towards the surface on which the ladder rests, a plurality of sucker elements 9 is fixed.

Vice versa, above the cap an element 3 is arranged with substantially parallelepiped-shaped configuration, which terminates at the lower part with a concave surface 4, which adapts to that of the underlying cap 2. The end 13 of one of the uprights can be fixed to such element 3.

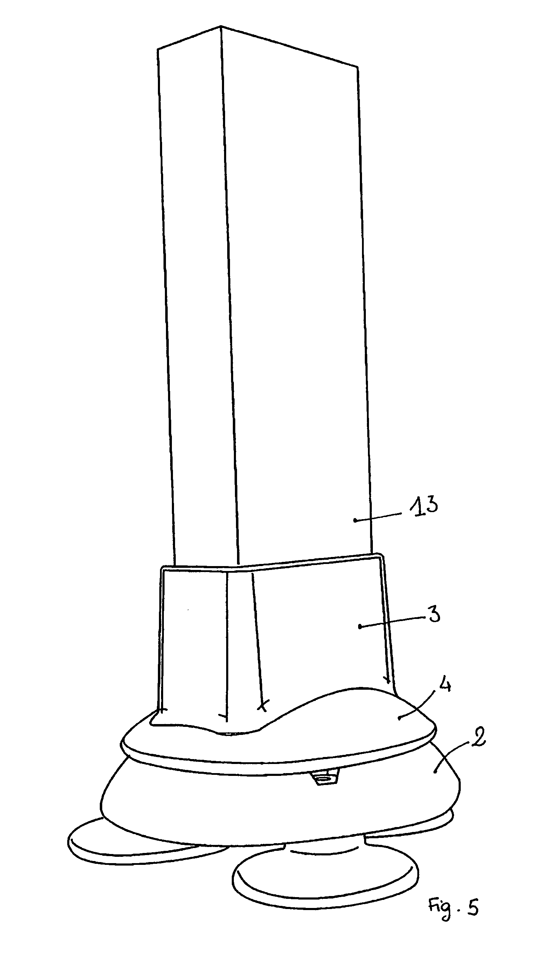

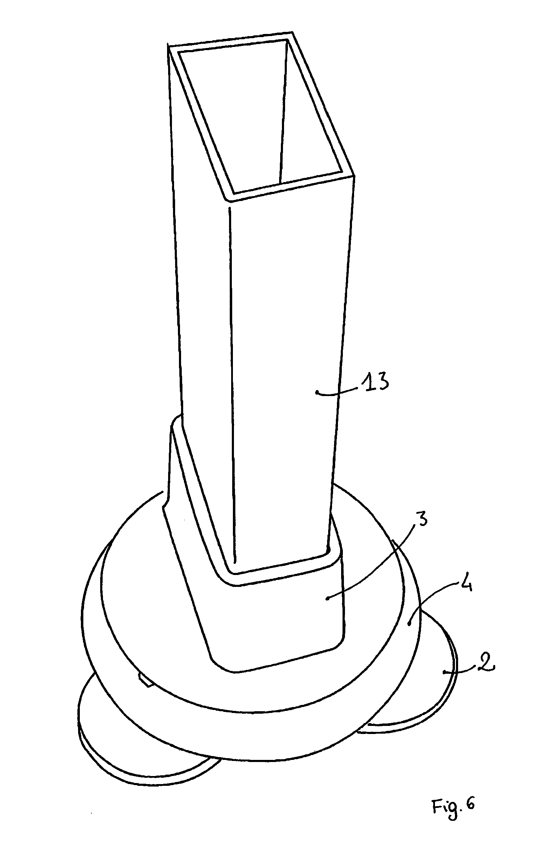

The elements described above are also particularly visible in figures 5 and 6.

Still as observable from figure 4, the cap 2 is fixed to the element 3 by means of a pin 5, which is inserted into an extended slit 6, present at the top of the cap, with the possibility of the pin sliding in said slit. The pin is internally prevented from slipping off from the cap by the presence of an element 7, advantageously disc-shaped, with transverse dimension adapted to prevent insertion thereof into the slit 6. Vice versa, at the inner threaded end of the pin 5 there is a bolt 8, which is arranged beneath the cap 2.

In particular a first longitudinal conduit 8' is provided, within which the bolt 8 is adapted to be inserted, which remains blocked therein once inserted. In practice, the pin 5 remains integral with the element 3, upon completing mounting; due to the presence of the extended slot 6, it is possible to provide a mutual angular movement between the element 3 and the upright 13 integral therewith with respect to the cap 2, to which the sucker elements 9 are fixed on the other hand. In particular, in order to obtain this fixing, said suckers 9 are integral with pins 14, to whose upper ends bolts are fixed, intended to be inserted into special holes 11, shaped identically, present in the cap 2.

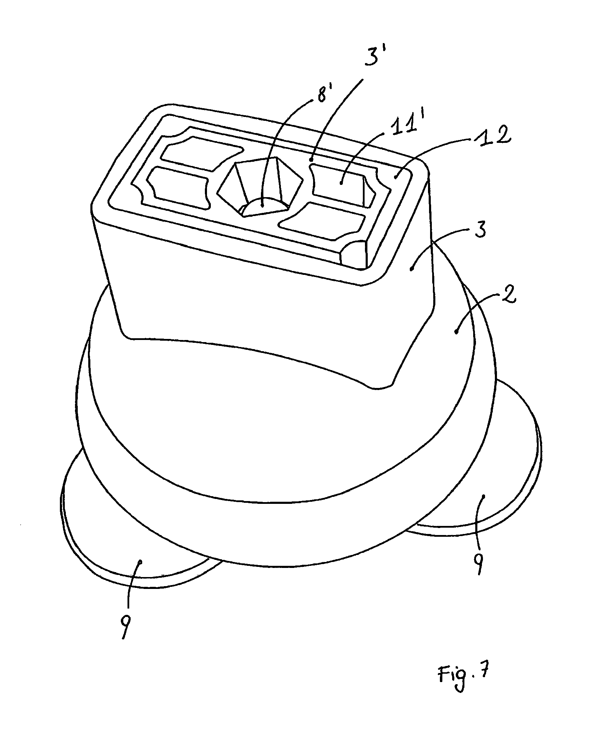

As observable in particular in figure 7, it can be seen that in the element 3 there is an inner part 3', within which in particular the conduit 8' mentioned previously is provided. This part 3' is separated from the outer surface of the element 3 by an annular seat 12. Within said seat, one of the ends 13, internally hollow, of one of the ladder uprights is adapted to be inserted, which thus terminates inserted between the outer surface of the element 3 and inner part 3' thereof, remaining blocked therein. Advantageously, the inner part 3' has longitudinally arranged conduits 11' which may vary in number and shape. The object of the presence of these conduits 11' is that of allowing a given deformability of the volume and of the inner part 3', so as to allow an easy insertion of the end of the upright into the annular seat 12.

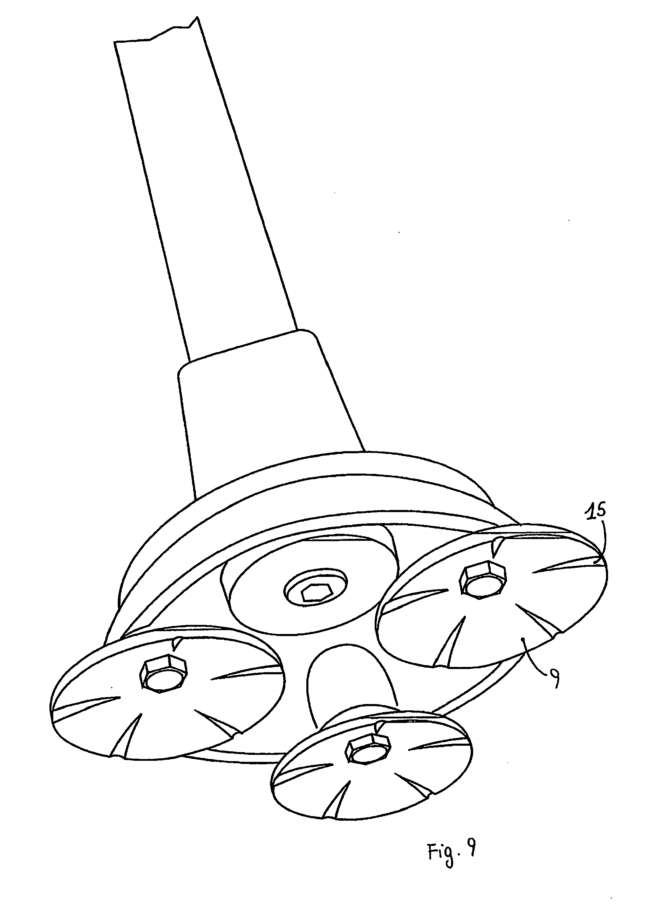

In figure 9, it is observable that, with the aim of improving the sealing of the sucker elements 9 it is possible to provide for grooves 15 arranged substantially radially, which depart from the edge of said sucker elements, up to almost reaching the central part of the sucker element. Alternatively, at the lower surface of the sucker elements 9, there may be projections 16 having low thickness. Conducted tests revealed that these two particular embodiments allow obtaining an increase of the adhesion force of the sucker elements with the underlying support surface, hence facilitating the stability of the ladder.

It should be pointed out that the structure 1, in the various embodiments thereof may also be used on ladders different from the one illustrated and described. In particular, such structure may be used in extensible, support and industrial ladders.

## Claims

1. DEVICE, to be mounted at the lower end of one or more uprights (13) of a portable ladder, comprising a structure (1), which comprise a cap (2), at whose concave surface, facing towards the surface on which the ladder can rest, a plurality of sucker elements (9) is fixed, above the cap there being arranged an element (3), with a substantially parallelepiped configuration, which terminates at the lower part with a concave surface (4), which adapts to that of the underlying cap (2), the end (13) of one uprights of the portable ladder being fixable to said element (3), the device being **characterized in that** the fixing of the cap (2) to the element (3) is obtained by means of a pin (5) inserted in an extended slot (6) present on the top part of the cap (2), with possibility of sliding the pin in said slot, the pin being internally prevented from slipping off from the cap being by the presence of an element (7), advantageously disc-shaped, with transverse dimension adapted to prevent insertion thereof into the slot (6), likewise at a threaded inner end of the pin (5) there being a bolt (8), which is arranged above the cap (2).

2. DEVICE, according to claim 1, **characterised in that** the element (3) has a longitudinal conduit (8') into which the bolt (8) is adapted to be inserted remaining blocked once inserted thereinto.

3. DEVICE, according to claim 1, **characterised in that** the sucker elements (9) are fixed to the cap (3) by means of pins (14), at whose upper ends the bolts (10) are fixed.

4. DEVICE, according to claim 1, **characterised in that** the element (3) has an annular seat (12), which internally surrounds the lateral walls thereof, one of the ends (13), internally hollow, of one of the ladder uprights being adapted to be inserted within said seat.

5. DEVICE, according to claim 4, **characterised in that** the element (3) has longitudinal conduits (11'), which allow the deformation of the volume of the inner part (3') thereof, once the end (13) of one of the uprights of the ladder is inserted into the annular seat (12) of the element (3).

6. DEVICE, according to claim 1, **characterised in that** on the sucker elements (9), grooves (15) are provided arranged substantially radially, which depart from the edge of said elements, up to almost reaching the centre of the abovementioned elements.

7. DEVICE, according to claim 1, **characterised in that** slight projections (16) are provided at the lower surface of the sucker elements (9).

8. PORTABLE LADDER, comprising uprights, **characterised in that** at the base of at least one of said uprights a device according to any of the preceding claims is mounted.

## Patentansprüche

1. VORRICHTUNG zur Befestigung am unteren Ende eines oder mehrerer Holme (13) einer tragbaren Leiter (13), die eine Konstruktion (1) umfasst, die eine Kappe (2) umfasst, auf deren konkaver Oberfläche, die der Oberfläche zugewandt ist, auf der die Leiter ruhen kann, eine Vielzahl von Saugerelementen (9) befestigt ist, wobei über der Kappe ein Element (3) mit einer im Wesentlichen parallelflachen Konfiguration angeordnet ist, das am unteren Teil mit einer konkaven Oberfläche (4) endet, die sich an die der darunterliegenden Kappe (2) anpasst, wobei das Ende (13) eines Holms der tragbaren Leiter an diesem Element (3) befestigt werden kann, wobei die Vorrichtung **dadurch gekennzeichnet, dass** die Befestigung der Kappe (2) an dem Element (3) mit Hilfe eines Zapfens (5) erhalten ist, der in einen verlängerten Schlitz (6) eingesetzt ist, der sich auf der Oberseite der Kappe (2) befindet, wobei die Möglichkeit besteht, den Zapfen in diesem Schlitz gleiten zu lassen, wobei der Zapfen innen am Rutschen aus der Kappe durch das Vorhandensein eines vorteilhafterweise scheibenförmigen Elements (7) mit einem Quermaß, das dessen Eintritt in den Schlitz (6) verhindern kann, gehindert wird, wobei sich ebenfalls an einem gewindeten inneren Ende des Zapfens (5) eine Mutter (8) befindet, die über der Kappe (2) angeordnet ist.

2. VORRICHTUNG nach Anspruch 1, **dadurch gekennzeichnet, dass** das Element (3) einen Längskanal (8') aufweist, in den die Mutter (8) eingesetzt werden kann, wobei sie blockiert bleibt, wenn sie hierin eingesetzt ist.

3. VORRICHTUNG nach Anspruch 1, **dadurch gekennzeichnet, dass** die Saugerelemente (9) an der Kappe (3) mit Zapfen (14) befestigt sind, an deren oberen Enden die Muttern (10) befestigt sind.

4. VORRICHTUNG nach Anspruch 1, **dadurch gekennzeichnet, dass** das Element (3) eine ringförmige Aufnahme (12) aufweist, die innen die Seitenwände desselben umgibt, wobei eines der innen hohlen Enden (13) von einem der Leiterholme geeignet ist, um in diese Aufnahme eingeführt zu werden.

5. VORRICHTUNG nach Anspruch 4, **dadurch gekennzeichnet, dass** das Element (3) Längskanäle (11') aufweist, welche die Verformung des Volumens des Innenteils (3') desselben ermöglichen, wenn das Ende (13) von einem der Holme der Leiter in die ringförmige Aufnahme (12) des Elements (3) eingeführt ist.

6. VORRICHTUNG nach Anspruch 1, **dadurch gekennzeichnet, dass** auf den Saugerelementen (9) im Wesentlichen radial angeordnete Kerben (15) vorgesehen sind, die vom Rand dieser Elemente ausgehen und fast die Mitte der oben genannten Elemente erreichen.

7. VORRICHTUNG nach Anspruch 1, **dadurch gekennzeichnet, dass** kleine Ansätze (16) auf der unteren Oberfläche der Saugerelemente (9) vorgesehen sind.

8. TRAGBARE LEITER, die Holme umfasst, **dadurch gekennzeichnet, dass** an das Fußteil von mindestens einem dieser Holme eine Vorrichtung nach einem der vorhergehenden Ansprüche montiert ist.

## Revendications

1. Dispositif destiné à être monté à l'extrémité inférieure d'un ou plusieurs montants (13) d'une échelle portable, comprenant une structure (1), qui comprend un capuchon (2), au niveau de la surface concave duquel, faisant face vers la surface sur laquelle l'échelle peut s'appuyer, une pluralité d'éléments de ventouse (9) est fixée, au-dessus du capuchon étant agencé un élément (3), avec une configuration sensiblement parallélépipède, qui se termine au niveau de la partie inférieure avec une surface concave (4), qui s'adapte à celle du capuchon sous-jacent (2), l'extrémité (13) d'un des montants de l'échelle portable pouvant être fixé audit élément (3), le dispositif étant **caractérisé en ce que** la fixation du capuchon (2) à l'élément (3) est obtenue au moyen d'une goupille (5) insérée dans une fente allongée (6) présente sur la partie supérieure du capuchon (2), avec la possibilité de faire coulisser la goupille dans ladite fente, la goupille étant empêchée intérieurement de glisser hors du capuchon par la présence d'un élément (7), avantageusement en forme de disque, avec une dimension transversale adaptée pour empêcher son insertion dans la fente (6), un boulon (8) étant présent de manière analogue à une extrémité intérieure filetée de la goupille (5), lequel est agencé au-dessus du capuchon (2).

2. Dispositif selon la revendication 1, **caractérisé en ce que** l'élément (3) comporte un conduit longitudinal (8') dans lequel le boulon (8) est adapté pour être inséré en restant bloqué une fois inséré dans celui-ci.

3. Dispositif selon la revendication 1, **caractérisé en ce que** les éléments de ventouse (9) sont fixés au capuchon (3) au moyen de goupilles (14), au niveau des extrémités supérieures desquelles sont fixés les boulons (10).

4. Dispositif selon la revendication 1, **caractérisé en ce que** l'élément (3) comporte un siège annulaire (12), qui entoure intérieurement les parois latérales de celui-ci, une des extrémités (13), creuse intérieurement, d'un des montants d'échelle étant adapté pour être insérée dans ledit siège.

5. Dispositif selon la revendication 4, **caractérisé en ce que** l'élément (3) comporte des conduits longitudinaux (11'), qui permettent la déformation du volume de la partie intérieure (3') de celui-ci, une fois que l'extrémité (13) d'un des montants de l'échelle est insérée dans le siège annulaire (12) de l'élément (3).

6. Dispositif selon la revendication 1, **caractérisé en ce que**, sur les éléments de ventouse (9), des rainures (15) sont prévues disposées de manière sensiblement radiale, lesquelles s'écartent du bord desdits éléments, pratiquement jusqu'à atteindre le centre des éléments mentionnés ci-dessus.

7. Dispositif selon la revendication 1, **caractérisé en ce que** des légères saillies (16) sont prévues au niveau de la surface inférieure des éléments de ventouse (9).

8. Echelle portable, comprenant des montants, **caractérisée en ce que**, à la base d'au moins un desdits montants, un dispositif selon l'une quelconque des revendications précédentes est monté.
